Europäisches Patentamt

European Patent Office

Office européen des brevets

(19)

(11) **EP 1 158 655 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.$^7$: **H02M 5/00**

(21) Anmeldenummer: **01107817.7**

(22) Anmeldetag: **06.04.2001**

(54) **Vorrichtung zur Simulation einer technologischen Anwendung mit einem umrichtergesteuerten Elektromotor**

Apparatus for simulation of a technological application with inverter controlled electrical motor

Dispositif de simulation d'une application technologique avec un moteur electric contrôlé par un invertisseur

(84) Benannte Vertragsstaaten:
**DE FR GB**

(30) Priorität: **26.05.2000 DE 10025936**

(43) Veröffentlichungstag der Anmeldung:
**28.11.2001 Patentblatt 2001/48**

(73) Patentinhaber: **Alstom**
**75116 Paris (FR)**

(72) Erfinder:
• **Scharf, Hans-Werner, Dipl.-Ing.**
**71032 Herrenberg (DE)**
• **Prenzel, Werner, Dipl.-Ing.**
**10625 Berlin (DE)**

(74) Vertreter: **Schäfer, Wolfgang, Dipl.-Ing.**
**Dreiss, Fuhlendorf, Steimle & Becker**
**Postfach 10 37 62**
**70032 Stuttgart (DE)**

(56) Entgegenhaltungen:
• **"Spezielle Prüfstände zur Untersuchung von NVH Phänomenen des Antriebsstangs" AACHENER KOLLOQUIUM FAHRZEUG- UND MOTORENTECHNIK, [Online] 1999, Seiten 1-17, XP002207098 Gefunden im Internet: <URL:http://www.ika.rwth-aachen.de/ueberu n s/publikat/rz0101a/9rz0053c.pdf> [gefunden am 2002-07-23]**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 158 655 B1

**Beschreibung**

Stand der Technik

Die Erfindung geht aus von einer Vorrichtung zum Betreiben eines Elektromotors, mit Mitteln zur Simulation von erwünschten Laufeigenschaften durch den Elektromotor und mit einem Umrichter zur Ansteuerung des Elektromotors.

Beispielsweise im Zusammenhang mit der Entwicklung eines Kraftfahrzeugs ist es häufig erforderlich, einen Test auf einem Prüfstand durchzuführen. Dabei wird z.B. das gesamte Kraftfahrzeug oder Teile davon angetrieben und getestet.

Beispielsweise werden die Räder und Reifen des Kraftfahrzeugs über einen längeren Zeitraum angetrieben und belastet und dadurch auf ihre Funktionalität überpüft, z.B. auf ihren Verschleiss. Der Antrieb der Räder kann mit Hilfe der Brennkraftmaschine des Kraftfahrzeugs erfolgen, was jedoch zur Folge hat, dass die Abgase der Brennkraftmaschine von dem Prüfstand abgeleitet werden müssen, und dass auch alle sonstigen Maßnahmen getroffen werden, die für den Betrieb der Brennkraftmaschine erforderlich sind. Dies ist mit Aufwand verbunden.

Es sind deshalb Versuche unternommen worden, das Kraftfahrzeug auf dem Prüfstand nicht mit seiner Brennkraftmaschine anzutreiben, sondern dieselbe durch einen umrichtergesteuerten Elektromotor zu ersetzen. Der Elektromotor hat dabei den Vorteil, dass keine Abgase entstehen, und dass auch ansonsten kein großer Betriebsoder Wartungsaufwand erforderlich ist.

Die Verwendung eines Elektromotors hat jedoch zur Folge, dass die charakteristischen Laufeigenschaften der Brennkraftmaschine nicht mehr vorhanden sind. Stattdessen weist der Elektromotor völlig andersartige Laufeigenschaften auf. Die Laufeigenschaften der Brennkraftmaschine müssen deshalb durch den Elektromotor nachgebildet bzw. simuliert werden. Hierzu ist es bekannt, einen Leitrechner vorzusehen, der die gesamte Simulationsberechnung durchführt und dann einen Sollwert an den Umrichter des Elektromotors ausgibt. Ein Stromistwert wird von dem Umrichter an den Leitrechner zurückgekoppelt, um von diesem bei der Simulationsberechnung berücksichtigt werden zu können.

Es versteht sich, dass die vorstehend beschriebene Simulation von erwünschten Laufeigenschaften nicht nur im Zusammenhang mit einer Brennkraftmaschine eines Kraftfahrzeugs anwendbar ist, sondern auch auf andere technische Gebiete übertragbar ist.

Aufgabe und Vorteile der Erfindung

Aufgabe der Erfindung ist es, eine Vorrichtung zum Betreiben eines Elektromotors zu schaffen, bei der die Simulation von erwünschten Laufeigenschaften weiter verbessert ist.

Diese Aufgabe wird bei einer Vorrichtung der eingangs genannten Art erfindungsgemäß dadurch gelöst, dass die Mittel zur Simulation in dem Umrichter enthalten sind.

Die gesamte Simulation der erwünschten Laufeigenschaften findet damit nicht mehr wie beim Stand der Technik in dem Leitrechner statt, sondern in dem Umrichter. Damit werden die Laufzeiten bzw. Totzeiten der gesamten Vorrichtung wesentlich verringert. Insbesondere werden Größen, die für die Simulation von grundlegender Bedeutung sind, wie z.B. die Drehzahl der Antriebswelle oder das von dem Elektromotor erzeugte Istmoment, nicht mehr zuerst an den Leitrechner zum Zwecke der Simulation weitergegeben, um erst danach über den Umrichter wieder auf den Elektromotor einwirken zu können. Stattdessen werden derartige Größen erfindungsgemäß unmittelbar in dem Umrichter verarbeitet, um dort schneller im Rahmen der Simulation aufbereitet zu werden, und um danach unmittelbar auf den Elektromotor einwirken zu können.

Aufgrund der geringeren Laufzeiten bzw. Totzeiten wird bei der erfindungsgemäßen Vorrichtung eine wesentlich verbesserte Simulation der erwünschten Laufeigenschaften des Elektromotors erreicht. Insbesondere ist die Simulation wesentlich genauer als beim Stand der Technik. Ebenfalls weist die Erfindung den Vorteil auf, dass die simulierten Laufeigenschaften jederzeit reproduziert werden können. Ebenfalls ist es möglich, die simulierten Laufeigenschaften jederzeit während des Betriebs beliebig zu verändern, um damit beispielsweise im Rahmen eines Dauertests die Betriebsbedingungen zu verändern oder Alterungen, Defekte oder sonstige Veränderungen zu simulieren.

Ein weiterer Vorteil der erfindungsgemäßen Vorrichtung besteht darin, dass als Leitrechner kein aufwendiger Großrechner mehr erforderlich ist. Stattdessen kann als Leitrechner ein üblicher und kostengünstiger Personalcomputer eingesetzt werden. In dem Umrichter können die Mittel zur Simulation der erwünschten Laufeigenschaften in der Form eines einfachen Mikroprozessors oder dergleichen realisiert sein, bei dem es sich ebenfalls um ein übliches und kostengünstiges Bauteil handelt.

Bei einer vorteilhaften Weiterbildung der Erfindung ist den Mitteln zur Simulation mindestens eine Größe zugeführt, die die erwünschten Laufeigenschaften festlegt. Besonders vorteilhaft ist es, wenn den Mitteln zur Simulation eine Führungsgröße für den Strom oder für das Moment und/oder eine oder mehrere Teilkomponenten und/oder ein oder mehrere Phasenwinkel zugeführt sind. Mit diesen Größen ist es in besonders einfacher, aber trotzdem genauer Weise möglich, die erwünschten Laufeigenschaften zu definieren.

Bei einer vorteilhaften Ausgestaltung der Erfindung sind die Mittel zur Simulation zur Ermittlung eines Sollwerts für den Umrichter vorgesehen, und es ist den Mitteln ein Stromistwert des Umrichters vorgegeben. Im Unterschied zum Stand der Technik, bei dem der Sollwert zwischen dem Leitrechner und dem Umrichter übertragen werden muss, ist dies bei der erfindungsgemäßen Vorrichtung nicht mehr erforderlich. Der Sollwert wird innerhalb des Umrichters gebildet und verarbeitet. Damit wird eine weitere Vereinfachung der erfindungsgemäßen Vorrichtung und eine weitere Verminderung von möglichen Laufzeiten bzw. Totzeiten erreicht.

Ebenfalls ist es zweckmäßig, wenn die Mittel zur Simulation zur Ermittlung eines Sollmoments vorgesehen sind. Zur weiteren Verbesserung der erfindungsgemäßen Vorrichtung kann vorgesehen sein, dass dem Umrichter ein Istmoment des Elektromotors zugeführt ist, und/oder dass dem Umrichter die Drehzahl einer mit dem Elektromotor gekoppelten Antriebswelle zugeführt ist.

Bei einer besonders vorteilhaften Anwendung der Erfindung ist der Elektromotor zur Simulation einer Brennkraftmaschine insbesondere eines Kraftfahrzeugs vorgesehen. Damit ist es nicht mehr erforderlich, bei Prüfstandstests von Kraftfahrzeugen all diejenigen Maßnahmen zu ergreifen, die für den Betrieb und die Wartung der Brennkraftmaschine des Kraftfahrzeugs notwendig sind. Stattdessen genügt es, die erfindungsgemäße Vorrichtung anstelle der Brennkraftmaschine mit dem Kraftfahrzeug zu koppeln, um danach sämtliche Tests in gleicher Weise durchzuführen wie bisher mit der Brennkraftmaschine. Der Aufwand für den Betrieb und die Wartung des Elektromotors ist dabei wesentlich geringer als bei einer Brennkraftmaschine.

Ein weiterer Vorteil der Erfindung besteht darin, dass mit der erfindungsgemäßen Simulation nicht nur die Laufeigenschaften einer Brennkraftmaschine nachgebildet bzw. simuliert werden können, sondern jegliche erwünschten Laufeigenschaften. Die Erfindung kann damit in beliebigen technischen Gebieten zur Anwendung kommen. Vorzugsweise kann die Erfindung ganz allgemein zur Simulation von Drehschwingungen aller Art vorgesehen sein.

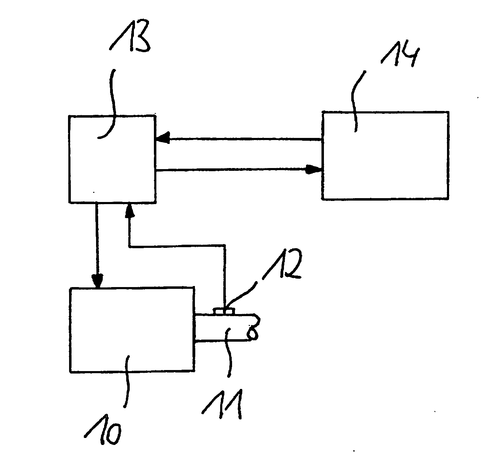

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung

Die einzige Figur der Zeichnung zeigt ein schematisches Blockschaltbild eines Ausführungsbeispiels einer erfindungsgemäßen Vorrichtung zum Betreiben eines Elektromotors.

In der Figur ist ein Elektromotor 10 dargestellt, der gegebenenfalls mit einer Kupplung und/oder einem Getriebe versehen ist. Der Elektromotor 10 ist dazu vorgesehen, eine Antriebswelle 11 in eine Drehbewegung zu versetzen. Der Antriebswelle 11 sind Sensoren 12 zugeordnet, die zur Messung der Drehzahl n der Antriebswelle 11 und des von dem Elektromotor 10 erzeugten Istmoments M-Ist vorgesehen sind.

Mit dem Elektromotor 10 kann beispielsweise ein Kraftfahrzeug angetrieben werden, das auf einem Prüfstand getestet wird. In diesem Fall ersetzt der Elektromotor 10 die an sich für den Antrieb vorgesehene Brennkraftmaschine des Kraftfahrzeugs. Die Antriebswelle 11 des Elektromotors 10 ist mit derjenigen Antriebswelle des Kraftfahrzeugs gekoppelt, die bisher mit der Brennkraftmaschine gekoppelt war. Die charakteristischen Laufeigenschaften der Brennkraftmaschine werden durch den Elektromotor nachgebildet bzw. simuliert. Dies wird mit Hilfe der nachfolgend beschriebenen Vorrichtung durchgeführt.

Es wird ausdrücklich darauf hingewiesen, dass der Elektromotor 10 nicht nur als Ersatz für eine Brennkraftmaschine eingesetzt werden kann. Stattdessen ist es möglich, den Elektromotor 10 ganz allgemein zur Simulation von erwünschten Laufeigenschaften zu verwenden.

Der Elektromotor 10 wird von einem Umrichter 13 gespeist. Dem Umrichter 13 werden zu diesem Zweck in Abhängigkeit von der jeweiligen Anwendung die Ausgangssignale der Sensoren 12 bezüglich der Drehzahl n und/oder des Istmoments M-Ist des Elektromotors 10 bzw. der Antriebswelle 11 zugeführt.

Gemäß der Figur ist ein Rechner 14 vorhanden, der mit dem Umrichter 13 verbunden ist. Der Rechner 14 erhält Steuersignale von dem Umrichter 13. Umgekehrt erhält der Umrichter 13 eine Mehrzahl von Größen von dem Rechner 14, mit denen erwünschte Laufeigenschaften des Elektromotors 10 definiert und an den Umrichter 13 weitergegeben werden.

Die erwünschten Laufeigenschaften des Elektromotors 10 werden mit Hilfe einer vorgegebenen Führungsgröße für den Strom oder für das Moment sowie mit Hilfe von Teilkomponenten A1, A2, ... An und Phasenwinkeln $\varphi 1$, $\varphi 2$, ... $\varphi n$ festgelegt. Mit Hilfe dieser Größen können die erwünschten Laufeigenschaften wie folgt nachgebildet bzw. simuliert werden:

$$\text{M-Soll} = \text{M-Vorgabe} + A1 \times \sin(\varphi 1 + \Delta\varphi 1)$$

$$+ A2 \times \sin(\varphi 2 + \Delta\varphi 2)$$

$$+ ...$$

$$+ An \times \sin(\varphi n + \varphi \Delta n)$$

wobei

M-Soll = Sollmoment als Funktion von $\varphi$ und A,

$\varphi$ = Drehwinkel, A=Amplitude und

M-Vorgabe = Führungsgröße für den Strom oder für das Moment.

Der Umrichter 13 ist mit einem Mikroprozessor oder dergleichen versehen. Der Umrichter 13 ermittelt aus den von dem Rechner 14 erhaltenen Größen über die vorstehende Gleichung das Sollmoment M-Soll, das die erwünschten Laufeigenschaften des Elektromotors in Abhängigkeit von dem Drehwinkel $\varphi$ und der Amplitude A darstellt.

Aus diesem Sollmoment M-Soll, dem ggf. vorhandenen Istmoment M-Ist und der gemessenen Drehzahl n des Elektromotors 10 ermittelt der Umrichter 13 einen Sollwert für die Ansteuerung des Elektromotors 10. Weiterhin wird in dem Umrichter ein Stromistwert gemessen, mit dem der Elektromotor 10 tatsächlich angesteuert wird. Auf der Grundlage des Sollwerts und des Stromistwerts wird dann letztlich der Elektromotor 10 angesteuert bzw. es wird auf dieser Grundlage die Ansteuerung des Elektromotors 10 verändert.

Im Hinblick auf das Sollmoment M-Soll und das ggf. vorliegende Istmoment M-Ist sowie im Hinblick auf den Sollwert und den Stromistwert können in dem Umrichter 13 auch Regelkreise realisiert sein.

Wesentlich ist, dass der Umrichter 13 von dem Rechner 14 nur die erwünschten Laufeigenschaften des Elektromotors 10 in Form von bestimmten Größen vorgegeben bekommt. Die eigentliche Simulation der erwünschten Laufeigenschaften, insbesondere die Berechnung des Sollmoments M-Soll bzw. des Sollwerts, erfolgt jedoch nicht in dem Rechner 14, sondern in dem Umrichter 13.

Es ist damit nicht erforderlich, den Stromistwert an den Rechner 14 zurückzukoppeln. Stattdessen kann der Stromistwert intern in dem Umrichter 13 verarbeitet werden.

Ebenfalls ist es nicht erforderlich, die Drehzahl n der Antriebswelle 11 oder das von dem Elektromotor 10 erzeugte Istmoment M-Ist an den Rechner 14 zurückzukoppeln. Stattdessen genügt es, diese Größen dem Umrichter 13 zur Weiterverarbeitung zuzuführen.

Die gesamte Simulation der erwünschten Laufeigenschaften wird damit durch den Umrichter 13 und nicht durch den Rechner 14 realisiert. Damit werden insbesondere Laufzeiten bzw. Totzeiten, die bei einer Simulation durch den Rechner 14 vorhanden wären, vermieden. Dies hat zur Folge, dass die Simulation der erwünschten Laufeigenschaften wesentlich genauer ist.

**Patentansprüche**

1. Vorrichtung zum Betreiben eines Elektromotors (10), mit Mitteln zur Simulation von erwünschten Laufeigenschaften durch den Elektromotor (10) und mit einem Umrichter (13) zur Ansteuerung des Elektromotors (10), **dadurch gekennzeichnet, dass** die Mittel zur Simulation in dem Umrichter (13) enthalten sind.

2. Vorrichtung nach Anspruch 1, **dadurch gekennzeichnet, dass** den Mitteln zur Simulation mindestens eine Größe zugeführt ist, die die erwünschten Laufeigenschaften festlegen.

3. Vorrichtung nach Anspruch 2, **dadurch gekennzeichnet, dass** den Mitteln zur Simulation eine Führungsgröße für den Strom oder für das Moment zugeführt ist.

4. Vorrichtung nach einem der Ansprüche 2 oder 3, **dadurch gekennzeichnet, dass** den Mitteln zur Simulation eine oder mehrere Teilkomponenten (A1, A2, ... An) und/oder ein oder mehrere Phasenwinkel (_1, _2, ... _n) zugeführt sind.

5. Vorrichtung nach einem der Ansprüche 1 bis 4, **dadurch gekennzeichnet, dass** die Mittel zur Simulation zur Ermittlung eines Sollwerts für den Umrichter (13) vorgesehen sind.

6. Vorrichtung nach Anspruch 5, **dadurch gekennzeichnet, dass** den Mitteln ein Stromistwert des Umrichters (13) vorgegeben ist.

7. Vorrichtung nach einem der vorstehenden Ansprüche, **dadurch gekennzeichnet, dass** die Mittel zur Simulation zur Ermittlung eines Sollmoments (M-Soll) vorgesehen sind.

8. Vorrichtung nach einem der vorstehenden Ansprüche, **dadurch gekennzeichnet, dass** dem Umrichter (13) ein Istmoment (M-Ist) des Elektromotors (10) zugeführt ist.

9. Vorrichtung nach einem der vorstehenden Ansprüche, **dadurch gekennzeichnet, dass** dem Umrichter (13) die Drehzahl (n) einer mit dem Elektromotor (10) gekoppelten Antriebswelle (11) zugeführt ist.

10. Vorrichtung nach einem der vorstehenden Ansprüche, **dadurch gekennzeichnet, dass** der Umrichter (13) einen Mikroprozessor oder dergleichen enthält.

11. Vorrichtung nach einem der vorstehenden Ansprüche, **dadurch gekennzeichnet, dass** der Elektromotor (10) zur Simulation einer Brennkraftmaschine insbesondere eines Kraftfahrzeugs vorgesehen ist.

12. Vorrichtung nach einem der vorstehenden Ansprüche, **dadurch gekennzeichnet, dass** der Elektromotor (10) zur Simulation einer Kraft- und/oder Arbeitsmaschine vorgesehen ist, z.B. einer Hydraulik- oder Pneumatikmaschine, einer Pumpe, einem Verdichter, einem Ventilator.

13. Vorrichtung nach einem der vorstehenden Ansprüche, **dadurch gekennzeichnet, dass** der Elektromotor (10) zur Simulation von Drehschwingungen aller Art vorgesehen ist.

**Claims**

1. Apparatus for operating an electric motor (10), having means for the simulation of desired running characteristics by the electric motor (10) and having an inverter (13) for driving the electric motor (10), **characterised in that** the means for simulation are contained in the inverter (13).

2. Apparatus according to claim 1, **characterised in that** at least one variable which defines the desired running characteristics is fed to the means for simulation

3. Apparatus according to claim 2, **characterised in that** a reference variable for current or torque is fed to the means for simulation.

4. Apparatus according to either of claims 2 and 3, **characterised in that** one or more sub-components (A1, A2, ... An) and/or one or more phase angles ($\varphi1$, $\varphi2$, ... $\varphi n$) are fed to the means for simulation.

5. Apparatus according to one of claims 1 to 4, **characterised in that** the means for simulation are intended to determine a desired value for the inverter (13).

6. Apparatus according to claim 5, **characterised in that** an actual value of current from the inverter (13) is preset for the means.

7. Apparatus according to one of the foregoing claims, **characterised in that** the means for simulation are intended to determine a desired torque (T desired).

8. Apparatus according to one of the foregoing claims, **characterised in that** an actual torque (T actual) from the electric motor (10) is fed to the inverter (13).

9. Apparatus according to one of the foregoing claims, **characterised in that** the speed of revolution (n) of a drive shaft (11) coupled to the electric motor (10) is fed to the inverter (13).

10. Apparatus according to one of the foregoing claims, **characterised in that** the inverter (13) contains a microprocessor or the like.

11. Apparatus according to one of the foregoing claims, **characterised in that** the electric motor (10) is intended to simulate an internal combustion engine, particularly of a motor vehicle.

12. Apparatus according to one of the foregoing claims, **characterised in that** the electric motor (10) is intended to simulate a driving and/or working machine, e.g. a hydraulic or pneumatic machine, a pump, a compressor, a fan.

13. Apparatus according to one of the foregoing claims, **characterised in that** the electric motor (10) is intended to simulate rotary oscillations of all kinds.

**Revendications**

1. Dispositif pour piloter un moteur électrique (10) avec des moyens de simulation des caractéristiques de fonctionnement souhaitées par le moteur électrique (10) et avec un invertisseur (13) pour commander le moteur électrique (10), **caractérisé en ce que** les moyens de simulation sont contenus dans l'invertisseur (13).

2. Dispositif selon la revendication 1, **caractérisé en ce qu'**au moins une grandeur définissant les caractéristiques de fonctionnement souhaitées est transmise aux moyens de simulation.

3. Dispositif selon la revendication 2, **caractérisé en ce qu'**une grandeur de référence pour l'intensité ou le couple est transmise aux moyens de simulation.

4. Dispositif selon l'une des revendications 2 ou 3, **caractérisé en ce qu'**une ou plusieurs composantes partielles (A1, A2, ... An) et/ou un ou plusieurs angles de phase ($\varphi1$, $\varphi2$, ...$\varphi n$) sont transmis aux moyens de simulation.

5. Dispositif selon l'une des revendications 1 à 4, **caractérisé en ce que** les moyens de simulation sont prévus pour déterminer une valeur de consigne pour l'invertisseur (13).

6. Dispositif selon la revendication 5, **caractérisé en ce qu'**une valeur effective de l'intensité de l'invertisseur (13) est préalablement communiquée aux moyens.

7. Dispositif selon l'une des revendications précédentes, **caractérisé en ce que** les moyens de simulation sont prévus pour déterminer un couple de consigne (M-cons).

**8.** Dispositif selon l'une des revendications précédentes, **caractérisé en ce qu'**un couple effectif (M-eff) du moteur électrique (10) est transmis à l'invertisseur (13).

**9.** Dispositif selon l'une des revendications précédentes, **caractérisé en ce que** le nombre de tours (n) d'un arbre d'entraînement (11) couplé au moteur électrique (10) est transmis à l'invertisseur (13).

**10.** Dispositif selon l'une des revendications précédentes, **caractérisé en ce que** l'invertisseur (13) contient un microprocesseur ou similaire.

**11.** Dispositif selon l'une des revendications précédentes, **caractérisé en ce que** le moteur électrique (10) est prévu pour simuler un moteur à combustion interne, en particulier de véhicule automobile.

**12.** Dispositif selon l'une des revendications précédentes, **caractérisé en ce que** le moteur électrique (10) est prévu pour simuler une machine motrice et/ou une machine productrice de travail, par exemple une machine hydraulique ou pneumatique, une pompe, un compresseur, un ventilateur.

**13.** Dispositif selon l'une des revendications précédentes, **caractérisé en ce que** le moteur électrique (10) est prévu pour simuler des vibrations de torsion de toutes sortes.